# EUROPEAN PATENT APPLICATION

(11) **EP 1 752 950 A1**
(43) Date of publication of application: **14.02.2007**
(21) Application number: 06016701.2
(22) Date of filing: 10.08.2006
(51) Int. Cl.: G09F 21/02, G06F 1/16

(54) **Display device**

(30) Priority: 12.08.2005 JP 2005233976; 10.05.2006 JP 2006131539
(71) Applicant: SEIKO EPSON CORPORATION, Shinjuku-ku, Tokyo 163-0811 (JP)
(72) Inventor: Tanaka, Yoshiyuki, Suwa-shi Nagano-ken 392-8502 (JP)
(74) Representative: HOFFMANN EITLE

(57) **Abstract**

To house a display panel in a sealed state to achieve water resistance and similar functionality in a ring-shaped display device.

A display device (10) having a display panel for displaying information, the display unit being ring shaped or shapeable in a ring; a ring-shaped support member (12) for supporting the display panel; a ring-shaped transparent member (11) that is disposed on the display side of the display panel supported by the support member (12) to protect the display panel; and a ring-shaped cover member (13,14) that is fit to the support member (12) for housing the display panel in cooperation with the support member (12) and the transparent member (11).

## Description

### [Technical Field]

The present invention relates to a display device, and relates more particularly to a structure for housing a display unit in a ring-shaped display device.

### [Background Art]

Various kinds of display devices that can be worn on the body are known from the literature.
Electrophoretic display devices that use electrophoresis have been proposed for use in this type of display device for power conservation and to reduce the thickness of the display device. See, for example, Japanese Unexamined Patent Appl. Pub. H1-86116.
Electrophoresis is known from the literature, and is the phenomenon whereby charged particles dispersed in a medium migrate when an electric field is applied.
In this type of electrophoretic display device an electrophoretic dispersion containing at least one type of electrophoretic particles (charged particles) is sealed between a pair of electrodes and a voltage is applied between this pair of electrodes to produce an electric field in the electrophoretic dispersion, thus changing the distribution of the electrophoretic particles in the electrophoretic dispersion and displaying content.

### [Problem to be solved by the invention]

A problem with these conventional display devices is that the display device functions simply to display certain information, and no consideration has been given to such functional aspects as water resistance.
More particularly, the literature is silent about a suitable structure for housing the display panel in a sealed state for use in a ring-shaped display device that is worn on the wrist, for example.
An object of the present invention is therefore to provide a display device that can hold the display panel in a sealed housing so that functionality such as water resistance can be imparted to a ring-shaped display device.

### [Disclosure of Invention]

To achieve this object, display device according to the present invention comprises a display unit for displaying information, the display unit being ring shaped or shapeable in a ring; a ring-shaped support member for supporting the display unit; a ring-shaped transparent member that is disposed on the display side of the display unit supported by the support member to protect the display unit; and a ring-shaped cover member that is fit to the support member for housing the display unit in cooperation with the support member and the transparent member.
Thus comprised, the cover member screws together with the support member, and houses the display unit in conjunction with the support member and transparent member.

. Preferably, the cover member comprises a first cover member that screws together with one axial end part of the support member; and a second cover member that screws together with the other axial end part of the support member.
In another aspect of the invention, the cover member screws together with one axial end part of the support member; and the support member comprises a holding part on the other axial end part to hold the transparent member in cooperation with the cover member.
In yet another aspect of the invention, the support member comprises a holding part on one axial end part; and the cover member comprises a fitting part that is fit and secured in the other axial end part [of the support member] for holding the transparent member in cooperation with the holding part.
In yet another aspect of the invention, the support member comprises a screw receiving part for receiving a screw; and the cover member comprises a screw hole part, the cover member being fastened to the other axial end part of the support member by screwing the screw through the screw hole part into the screw receiving part and fitting the fitting part.

Further preferably, the screw receiving part is perpendicular to the axial direction; and the screw hole is rendered substantially in the middle in the direction perpendicular to the axial direction of the cover member.
In another aspect of the invention, the support member comprises an engaged part; the cover member comprises a flexible arm part and an engaging part supported by the arm part; and the cover member is fastened to the other axial end part of the support member by pressing the fitting part of the cover member in from the other end part of the support member while deflecting the arm part, causing the engaging part to engage the engaged part and inserting the fitting part.
Further preferably, the fitting part is press fit into one axial end part of the support member.
Yet further preferably, seal members are disposed between the cover member and the support member and transparent member; and the display unit is housed in a sealed state.

A display device according to another aspect of the invention comprises a display unit for displaying information, the display unit being ring shaped or shapeable in a ring; a ring-shaped support member made from a transparent material and comprising a storage channel that is ring-shaped in section for holding the display unit; and a ring-shaped cover member that screws together with the support member to house the display unit in cooperation with the support member.
Thus comprised, the cover member screws together with the support member and houses the display unit in cooperation with the support member.
Preferably, a seal member is disposed between the cover member and the support member so that the display unit is housed in a sealed state.

### [Effect of the invention]

The present invention enables easily housing a display panel in a sealed state using a simple construction so that functionality such as water resistance can be imparted to a ring-shaped display device.

Further advantageous embodiments and improvements of the invention are listed in the dependent claims. The invention may also comprise further embodiments which result from a combination of features/steps which are described separately in the claims/the drawings and the specification.

### [Brief description of the drawings]

FIG. 1 is an external oblique view of a display device according to this embodiment of the invention.
FIG. 2 is a partial oblique section view of plane P through line A-A shown in FIG. 1 of the display device according to this embodiment of the invention.
FIG. 3 is an exploded oblique view of the display device.
FIG. 4 is a schematic block diagram of the display device.
FIG. 5 is a section view of the display panel.
FIG. 6 is an enlarged view of a portion of the display panel.
FIG. 7 is a partial oblique section view of plane P through line A-A shown in FIG. 1 of the display device according to a second embodiment of the invention.
FIG. 8 is a partial oblique section view of the display device according to a third embodiment of the invention showing plane P through line A-A shown in FIG. 1.
FIG. 9 is an external oblique view of the display device according to a fourth embodiment of the invention.
FIG. 10 is a partial oblique section view of plane P through line Q-Q shown in FIG. 9 of the display device according to a fourth embodiment of the invention.
FIG. 11 is a section view of a display device according to a fifth embodiment of the invention.
FIG. 12 is an external oblique view of a display device according to a sixth embodiment of the invention.
FIG. 13 is a section view of a display device according to a sixth embodiment of the invention.
FIG. 14 is a section view of a display device according to a seventh embodiment of the invention.
FIG. 15 is an oblique section view of a main part of the seventh embodiment of the invention.
FIG. 16 is a plan view describing the relative dimensions of the engaged part and the engaging part in the seventh embodiment of the invention.
FIG. 17 shows the engaged part and the engaging part when engaged in the seventh embodiment of the invention.

### [Embodiments of the Invention]

Preferred embodiments of the present invention are described below with reference to the accompanying figures.

### [1] First embodiment

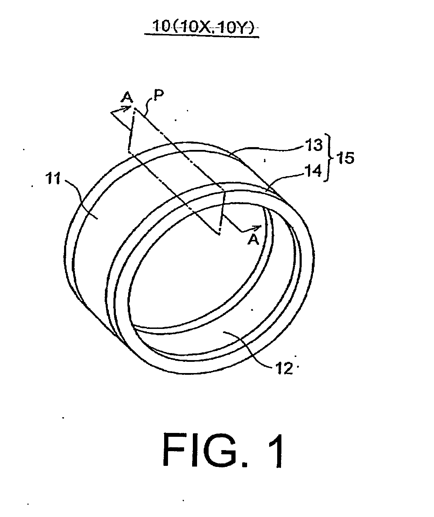

FIG. 1 is an external oblique view of a display device according to this embodiment of the invention.
The main parts of this display device 10 are a transparent member 11 formed from transparent material in a cylindrical shape so that an internal display panel described below is visible, a cylindrical support member 12 for supporting the display panel described below, and a cover member 15 having a first cover member 13 and a second cover member 14 that thread onto the support member 12 and hold the transparent member 11 therebetween axially to the support member 12.
The transparent member 11 is made of glass or hard plastic, and is formed as a cylinder with a uniform thickness.

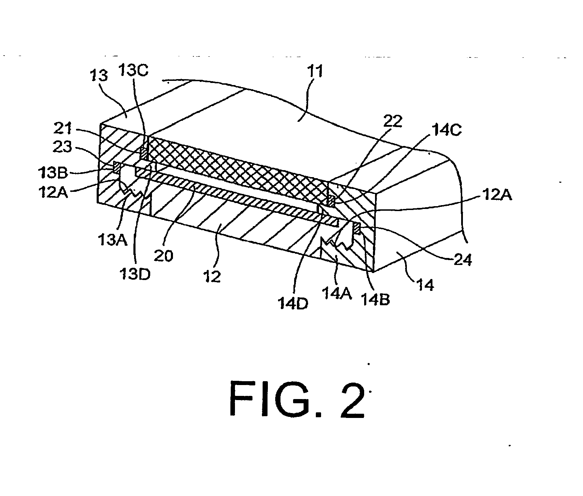

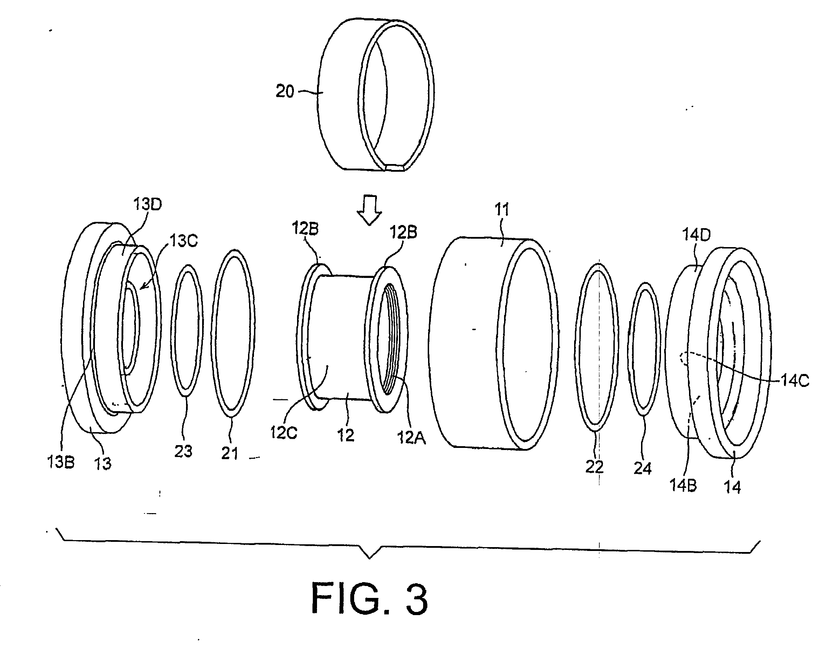

FIG. 2 is a partial oblique section view of plane P through line A-A shown in FIG. 1 of the display device according to this embodiment of the invention, and FIG. 3 is an exploded oblique view of the display device.
The first cover member 13 and second cover member 14 each have a screw thread 13A, 14A around the circumference, and are screwed onto the screw thread 12A of the support member 12.
The support member 12 also has flanges 12B formed around the outside circumference, and a display panel 20 is fit into the channel 12C between the flanges 12B [12, sic]. The transparent member 11 is held between the first cover member 13 and second cover member 14 in a position facing the display panel 20.
A ring-shaped seal 21 is disposed between the transparent member 11 and first cover member 13 to assure an airtight seal. A ring-shaped seal 22 is likewise disposed between the transparent member 11 and second cover member 14 to assure an airtight seal. A ring-shaped seal 23 is also disposed between the support member 12 and first cover member 13 to assure an airtight seal. A ring-shaped seal 24 is also disposed between the support member 12 and second cover member 14 to assure an airtight seal.

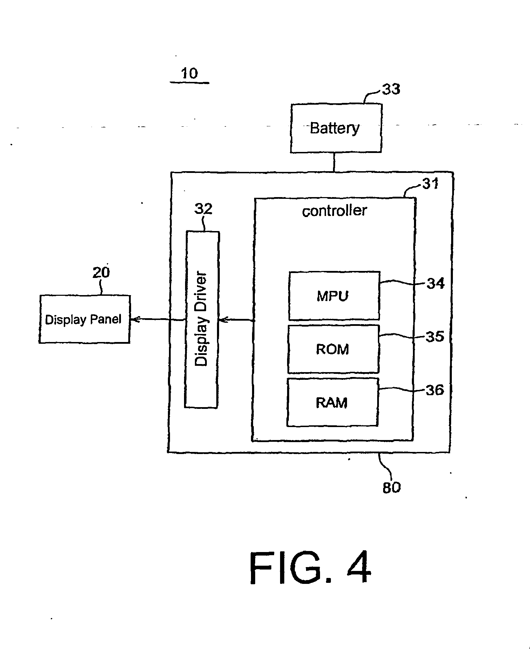

FIG. 4 is a schematic block diagram of the display device.
The main parts of the display device 10 are the display panel 20 described above, a controller 31 for controlling the display device 10, a display driver 32 for driving the display panel 20 as controlled by the controller 31, and a battery 33 for supplying power to the display device 10.
The controller 31 and display driver 32 are rendered on a control circuit board 80.
The controller 31 comprises an MPU 34 for controlling the controller 31, and therefore the display device 10, based on a control program, ROM 35 for storing the control program, and RAM 36 for temporarily storing data, and these components are connected to each other over a bus not shown.

The arrangement of the display panel is described next.

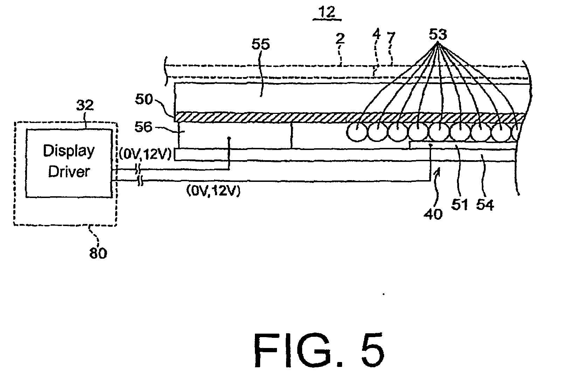

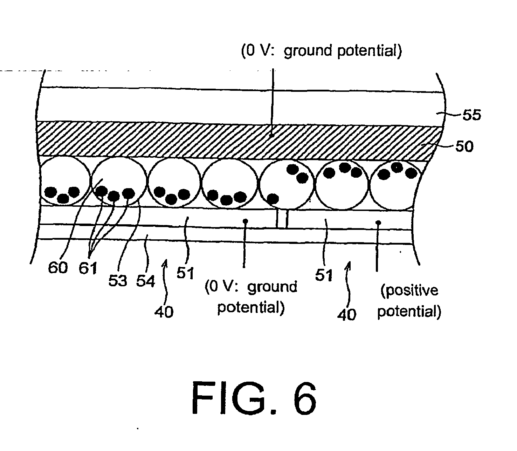

FIG. 5 is a section view of the display panel. FIG. 6 is an enlarged view of a portion of the display panel.
Only the transparent electrode is shaded in FIG. 5 and FIG. 6 and the other parts are not shaded in order to avoid complicating the drawing.
An electrophoretic display panel is used for the display panel 20. As shown in FIG. 5, the display panel 20 has a transparent common electrode 50 and display control electrodes 51, and a multitude of microcapsules 53 disposed between the transparent common electrode 50 and display control electrodes 51. The microcapsules 53 are filled with an electrophoretic medium 60 (see FIG. 6). The display control electrodes 51 are electrodes disposed for each segment 40 (or dot) of the display panel 20, and these display control electrodes 51 are formed on a flexible circuit board 54. This transparent common electrode 50 is a transparent electrode formed by vapor deposition of ITO (indium tin-oxide), for example, on a transparent glass substrate 55, and is disposed opposite the display control electrodes 51. The transparent common electrode 50 is formed as a single electrode covering all of the display control electrodes 51, is connected to a common electrode 56 rendered on the flexible circuit board 54, and is held at the same potential as the common electrode 56.

The display color presented by the microcapsules 53 can be seen through the transparent glass substrate 55 and transparent common electrode 50 with the display panel 20 thus comprised.
A drive voltage from the display driver 32 disposed on the control circuit board 80 side is supplied through wiring lines not shown rendered (printed) on the flexible circuit board 54 to the common electrode 56 and display control electrodes 51, and an electric field is thus applied to the electrophoretic medium 60 filling the microcapsules 53. As shown in FIG. 6 [FIG. 4, sic], blue particles 61 that are electrophoretic particles dyed blue are dispersed in the electrophoretic dispersion medium inside the microcapsules 53, rendering a so-called one-particle electrophoretic display. These blue particles 61 are positively charged, and the electrophoretic dispersion medium 60 is white.

As a result, when the common electrode 56 is held at 0 V (ground potential) and the transparent common electrode 50 is set to 0 V, and a positive drive voltage is supplied to the display control electrodes 51, an electric field flows from the display control electrodes 51 to the transparent common electrode 50. The positively charged blue particles 61 inside the microcapsules 53 therefore migrate to the transparent common electrode 50 side as shown in FIG. 6, and the white electrophoretic medium 60 moves to the display control electrode 51 side. The microcapsules 53 therefore appear blue, and the segment 40 displays blue. Conversely, when a positive drive voltage is supplied to the common electrode 56, the transparent common electrode 50 is positively charged, and the display control electrode 51 is held at 0 V, the positively charged blue particles 61 migrate to the display control electrode 51 side, the white electrophoretic medium 60 moves to the transparent common electrode 50 side, the microcapsules 53 therefore appear white, and the segment 40 displays white. When there is no potential difference between the transparent common electrode 50 and display control electrode 51, the blue particles 61 do not migrate, the display color of the segment 40 does not change, and the same display state is therefore maintained.
The display panel 20 therefore displays information with an image retention characteristic (memory).

Assembling this display device is described next.
Seal 21 is profit into seal channel 13B and seal 23 is prefit into seal channel 13C in the first cover member 13. Likewise, seal 22 is prefit into seal channel 14B and seal 24 is prefit into seal channel 14C in the second cover member 14.
The display panel 20 is also prefit to the portion between the flanges 12B of the support member 12.
The support member 12 and assembled display panel 20 are then inserted to the inside circumference part of the guide ring 13D of the first cover member 13, and screwed together with threads 13A.
The transparent member 11 is then fit over the outside circumference of the guide ring 13D part of the first cover member 13.
The inside circumference part of the guide ring 14D of the second cover member 14 is then fit to the support member 12, and threaded into the threads 14A to complete assembly.
A ring-shaped display device 10 according to this embodiment of the invention can thus reliably hold the display panel sealed by means of a simple construction, and thus easily provides water resistance and dust resistance.

### [2] Second embodiment

In the first embodiment the cover member 15 comprises first cover member 13 and second cover member 14. In this second embodiment, however, the cover member is a single piece.

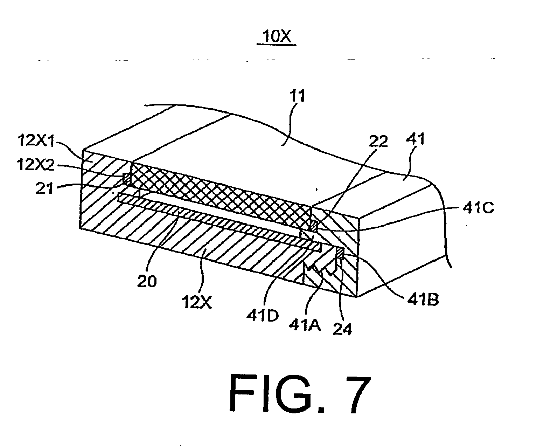

FIG. 7 is a partial oblique section view of plane P through line A-A shown in FIG. 1 of the display device according to this second embodiment. Like parts in FIG. 7 and FIG. 2 are identified by like reference numerals.
The cover member 41 in this second embodiment of the invention screws onto one axial end of the support member 12X.
A shoulder 12X1 is rendered to the other axial end of the support member 12X for cooperating with the cover member 41 to hold the transparent member 11 therebetween.

Assembling the display device according to this second embodiment of the invention is described next.
A seal 21 is first fit into seal channel 12X2 of the support member 12X. Seal 24 is likewise fit into a seal channel 41B in the cover member 41, and seal 22 is fit into seal channel 41C.
The display panel 20 is then fit onto the support member 12X.
The transparent member 11 is then fit over the display panel 20 assembled to the support member 12X.
The inside circumference part of the guide ring part 41D of the cover member 41 is then fit into the support member 12X and screwed into threads 41A to complete assembly.
A ring-shaped display device 10X according to this embodiment of the invention can thus reliably hold the display panel sealed by means of a simple construction, and thus easily provides water resistance and dust resistance.

### [3] Third embodiment

In the first and second embodiments the transparent member is rendered as a discrete part. This third embodiment renders the transparent member and support member as a single part.

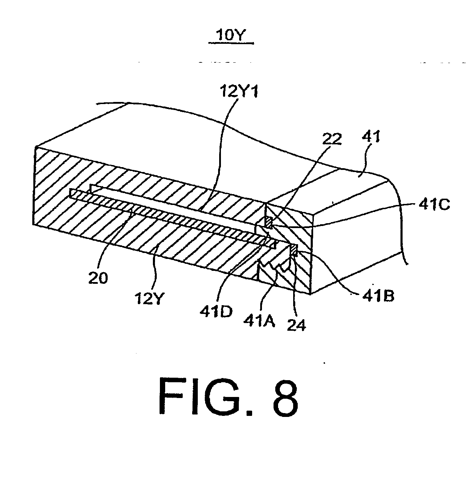

FIG. 8 is a partial oblique section view of the display device according to this third embodiment showing plane P through line A-A shown in FIG. 1. Like parts in FIG. 8 and FIG. 7 are identified by like reference numerals.
The support member 12Y in this third embodiment is the transparent member, and has a housing channel 12Y1 that is ring-shaped in cross section for holding the display panel 20.

Assembling the display device according to this third embodiment of the invention is described next.
The display panel 20 is first inserted to the housing channel 12Y1 [12Y, sic].
A seal 24 is fit into seal channel 41B, and seal 22 is fit into seal channel 41C of the cover member 41.
The threads 41A on the inside circumference part of the guide ring part 41D of the cover member 41 are then screwed to the support member 12Y in which the display panel 20 is held to complete assembly.
A ring-shaped display device 10Y according to this embodiment of the invention can thus reliably hold the display panel sealed by means of a simple construction having few parts, and thus easily provides water resistance and dust resistance.

### [4] Fourth embodiment

The display device in the preceding embodiments is round when seen in section. This fourth embodiment, however, is an embodiment for improving freedom designing the shape of the display device in section, and shows an embodiment that is substantially square in section.

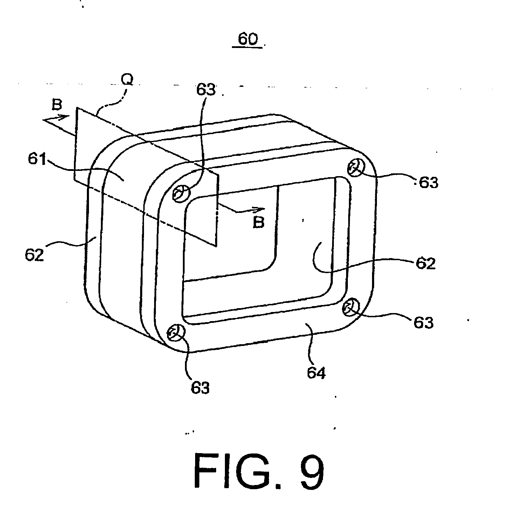

FIG. 9 is an external oblique view of the display device according to this fourth embodiment.
The main parts of this display device 60 [NOTE: 60 is electrophoretic medium 60 above] are a transparent member 61 [NOTE, blue particles 61 above] formed from transparent material in a substantially square tubular shape so that an internal display panel described below is visible, a support member 62 with a substantially square tubular shape for supporting the display panel described below, and a cover member 64 that is fastened by a plurality of screws 63 to the support member 62 to hold the transparent member 61 between the support member 62 and cover member 64.
The transparent member 61 is made of glass or hard plastic, and is formed with a substantially square tubular shape having a uniform thickness.

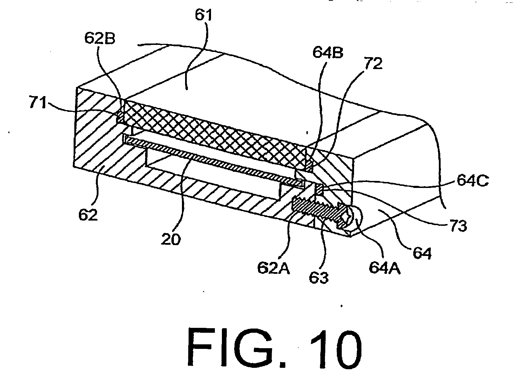

FIG. 10 is a partial oblique section view of plane P through line Q-Q shown in FIG. 9 of the display device according to this embodiment of the invention.
Screw holes 62A are formed in the support member 62, and screw holes 64A are formed at corresponding positions in the cover member 64. Screws 63 are screwed into the screw threads formed in screw holes 62A and the screw threads formed in screw holes 64A to fasten the support member 62 and cover member 64 together with the display panel 20 and transparent member 61 therebetween.
Assembling the display device according to this fourth embodiment of the invention is described next.
A seal 71 is first fit into the seal channel 62B of the support member 62, and seal 72 is fit into seal channel 64B and seal 73 is fit into seal channel 64C of the cover member 64.
The display panel 20 is then fit into the support member 62.
The transparent member 61 is then fit to the support member 62 and the assembled display panel 20.

Screws 63 are then screwed into the screw holes 64A of the cover member 64 and screw holes 62A of the support member 62 to secure the blue particles 61 and display panel 20 between the support member 62 and cover member 64, and thus complete assembly.
A display device 60 with a substantially square tubular shape according to this embodiment of the invention can thus reliably hold the display panel sealed by means of a simple construction, and thus easily provides water resistance and dust resistance.

### [5] Fifth embodiment

The screw holes 64A are rendered on the inside circumference side of the substantially square tubular shaped display device 60 in the fourth embodiment of the invention. This fifth embodiment of the invention improves freedom positioning the screw holes and thus improves the freedom of design.

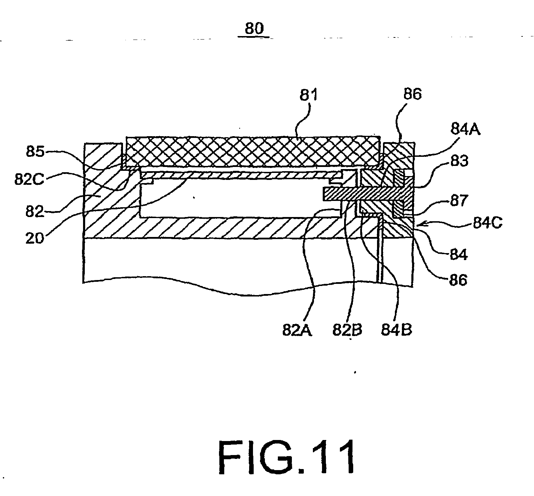

FIG. 11 is a section view of a display device according to this fifth embodiment of the invention.
The main parts of this display device 80 are a transparent member 81 formed from transparent material in a substantially square tubular shape so that an internal display panel described below is visible, a support member 82 with a substantially square tubular shape for supporting the display panel described below, and a cover member 64 that is fastened by a plurality of screws 83 to the support member 82 to hold the transparent member 81 between the support member 82 and cover member 84.
The transparent member 81 is made of glass or hard plastic, and is formed with a substantially square tubular shape having a uniform thickness.

A screw receptor 82A is formed in the support member 82 at a position opposite the cover member 84, and screw holes 82B are formed in the screw receptor 82A at positions opposite the screw hole part 84B of the cover member 84 having screw holes 84A opened to the left as seen in FIG. 11. The support member 82 and cover member 84 can thus be held together by screws 83 with the display panel 20 and transparent member 81 between the support member 82 and cover member 84.

Assembling the display device according to this fifth embodiment of the invention is described next.
A seal 85 that is L-shaped in section is fit to a seal seat 82C rendered on the support member 82. A ring-shaped seal 86 is fit around the circumference of the screw hole part 84B of the cover member 84.

A seal washer 87 is also fit to the screws 83.
The display panel 20 is then first fit to the support member 82.
The transparent member 81 is then fit to the support member 82 with the assembled display panel 20.

With the cover member 84 fit to the support member 82, screws 83 with fitted seal washers 87 are screwed into the screw holes 84A and into the cover member 84.
The screws 83 are then screwed further into the screw receptor 82A.
As a result, the transparent member 81 and display panel 20 are secured between the support member 82 and cover member 84, and assembly is completed.
A display device 80 with a substantially square tubular shape according to this embodiment of the invention can thus reliably hold the display panel sealed by means of a simple construction, and thus easily provides water resistance and dust resistance.
The design is also improved because the screw holes 84B for the screws 83 can be located substantially in the center of the face 84C of the cover member 84.

### [6] Sixth embodiment

In the fourth and fifth embodiments the support member and cover member are fastened by screws. In this sixth embodiment of the invention the support member and cover member are fastened by a pressure fitting.

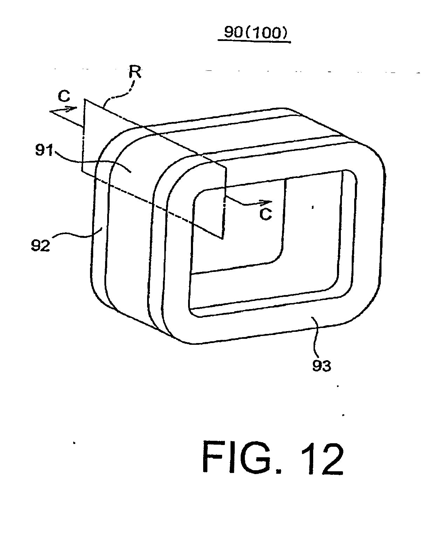

FIG. 12 is an external oblique view of a display device according to this sixth embodiment of the invention.

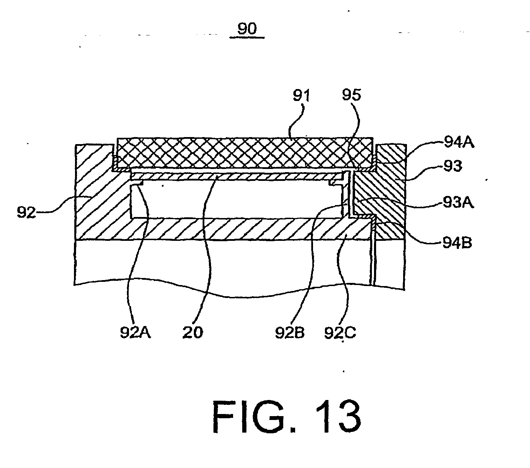

FIG. 13 is a section view of a display device according to this sixth embodiment of the invention.
The main parts of this display device 90 are a transparent member 91 formed from transparent material in a substantially square tubular shape so that an internal display panel described below is visible, a support member 92 with a substantially square tubular shape for supporting the display panel described below, and a cover member 93 that is press fit to the support member 92 to hold the transparent member 91 between the support member 92 and cover member 93.

The transparent member 91 is made of glass or hard plastic, and is formed with a substantially square tubular shape having a uniform thickness.
The support member 92 comprises a first support member 92A and a second support member 92B for supporting the display panel 20, and a fitting flange 92C to which the cover member 93 is pressure fit.
The cover member 93 has an annular protruding fitting ring 93A (fitting portion), and a ring-shaped first seal 94A that is L-shaped in section is disposed around the fitting ring 93A on the top side of the fitting ring 93A as seen in the figure. A ring-shaped second seal 94B that is L-shaped in section is likewise disposed around the fitting ring 93A on the bottom side of the fitting ring 93A as seen in the figure.

Assembling the display device according to this sixth embodiment of the invention is described next.
The first seal 94A and second seal 94B are prefit to the fitting ring 93A of the cover member 93.
The display panel 20 is placed and fit to the first support member 92A and second support member 92B of the support member 92.
The ring-shaped transparent member 91 is then pressed and fit from the right as seen in the figure onto the support member 92 to which the display panel 20 is assembled.

The fitting ring 93A of the cover member 93 is then pressed and secured in the fitting channel 95 formed by the transparent member 91 and the fitting flange 92C of the support member 92, thereby securing the transparent member 91 and display panel 20 and completing assembly.
A display device 90 with a substantially square tubular shape according to this embodiment of the invention can thus reliably hold the display panel sealed by means of a simple construction, and thus easily provides water resistance and dust resistance, by simply pressing the fitting ring 93A of the cover member 93 into a fitting channel 95 formed between the transparent member 91 and the fitting flange 92C of the support member 92.

### [7] Seventh embodiment

In the sixth embodiment of the invention a fitting ring part of the cover member is simply pressed into a matching channel formed by the support member and transparent member. In this seventh embodiment of the invention a similar pressure fitting is combined with positively engaging the support member and cover member.
The external appearance of the display device according to this seventh embodiment of the invention is the same as the sixth embodiment shown in FIG. 12.

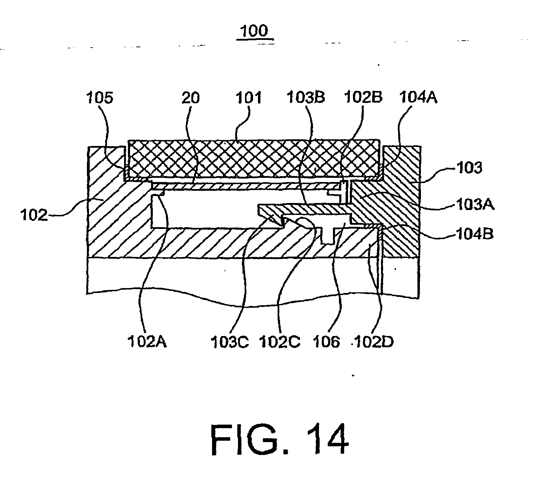

FIG. 14 is a section view of a display device according to this seventh embodiment of the invention.

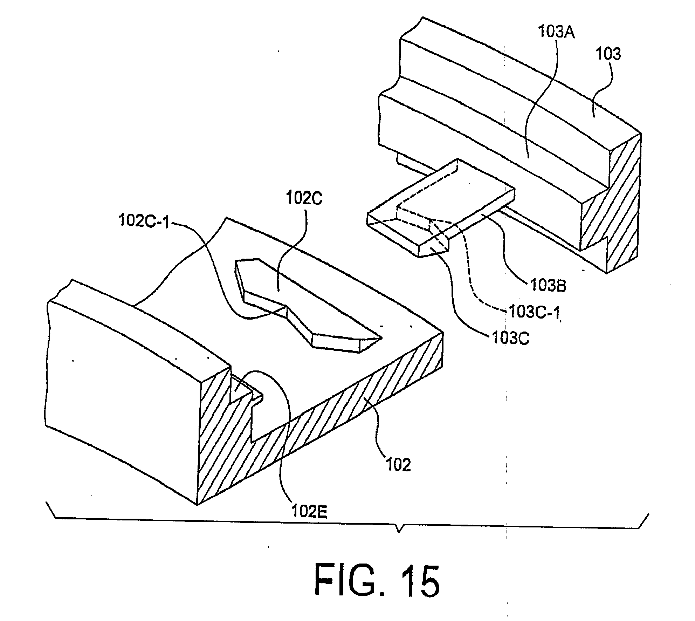

FIG. 15 is an oblique section view of a main part of the seventh embodiment of the invention.
The main parts of this display device 100 are a transparent member 101 formed from transparent material in a substantially square tubular shape so that an internal display panel described below is visible, a support member 102 with a substantially square tubular shape for supporting the display panel described below, and a cover member 103 that is press fit to the support member 102 to hold the transparent member 101 between the support member 102 and cover member 103.
The transparent member 101 is made of glass or hard plastic, and is formed with a substantially square tubular shape having a uniform thickness.

The support member 102 comprises a first support member 102A and a second support member 102B for supporting the display panel 20, an engaged part 102C that is engaged by the cover member 103, and a fitting flange 102D to which the cover member 103 is pressure fit.
The cover member 103 has an annular protruding fitting ring 103A (fitting portion), and a ring-shaped first seal 104A that is L-shaped in section is disposed around the fitting ring 103A on the top side of the fitting ring 103A as seen in the figure. A ring-shaped second seal 104B that is L-shaped in section is likewise disposed around the fitting ring 103A on the bottom side of the fitting ring 103A as seen in the figure.
The cover member 103 also has a flexible arm 103B and an engaging part 103C that is supported by this flexible arm 103B. The flexible arm 103B projects from the fitting ring 103A.

The shape of the engaged part 102C and engaging part 103C [103A, sic] are described in detail next.

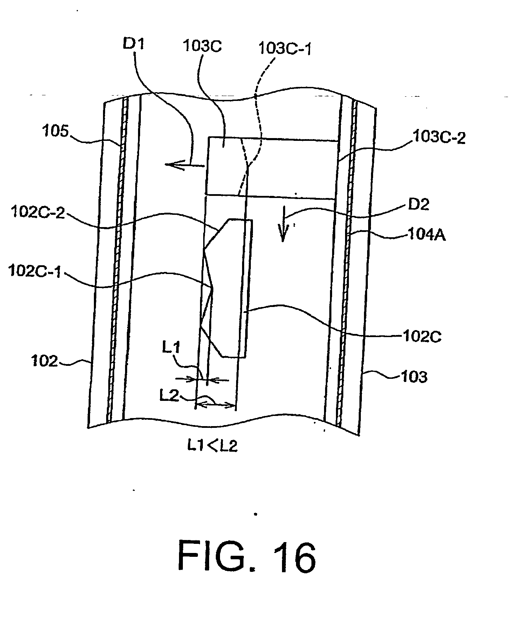

FIG. 16 is a plan view describing the relative dimensions of the engaged part and the engaging part.

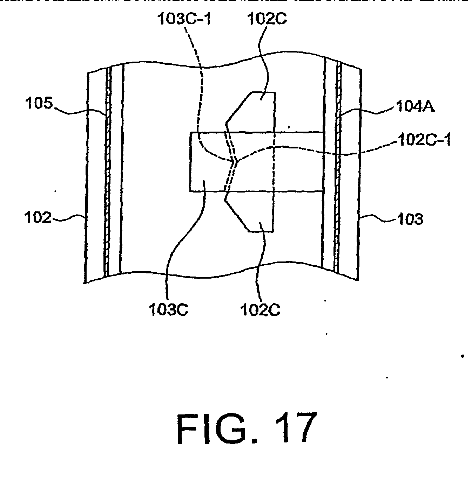

FIG. 17 shows the engaged part and the engaging part when engaged.
When seen from above, the engaging part 103C protrudes like a roof peak towards the fitting ring 103A, and the engaged part 102C is recessed toward the fitting ring 103A in a valley matching the shape of the engaging part 103C. As shown in FIG. 16, when the arm part 103B is inserted in the direction of arrow D1 to the support member 102 so that the cover member 103 contacts the support member 102 through the intervening first seal 104A and second seal 104B without the arm part 103B engaging the engaged part 102C, the linear distance L1 from the distal end of the arm part 103B to the bottom 102C-1 of the recess contacted by the peak 103C-1 of the engaging part 103C when the engaging part 103C engages the support member 102 is less than the length L2 from the distal end of the arm part 103B to the peak 103C-1 of the engaging part 103C, that is,
L1 < L2.
The engaging part 103C is then engaged with the support member 102 by compressing the first seal 104A, second seal 104B, and seal 105 on the support member side to engage the engaging part 103C with the support member 102 and assure a reliable seal.

Assembling a display device according to this seventh embodiment of the invention is described next.
The first seal 104A and second seal 104B are prefit to the fitting ring 103A of the cover member 103. The seal 105 on the support member side is also prefit to the seal seat 102E of the support member 102.
The display panel 20 is then placed and fit into the first support member 102A and second support member 102B of the support member 102.
The ring-shaped transparent member 101 is then fit from the right as seen in FIG. 14 to the support member 102 with the assembled display panel 20.
The fitting ring 103A of the cover member 103 is then inserted in the direction of arrow D1 in FIG. 16 to the fitting channel 106 formed by the transparent member 101 and the fitting flange 102D [102C, sic] of the support member 102.
The cover member 103 is then rotated in the direction of arrow D2 until incline 103C-2 of the engaging part 103C contacts incline 102C-2, and the cover member 103 is then rotated further in the direction of arrow D2.
This causes the arm part 103B to deflect while the engaging part 103C slides in contact with engaged part 102C of support member 102 until the engaged part 102C and engaging part 103C then engage, thus compressing the first seal 104A, second seal 104B, and seal 105 on the support member side, engaging the support member 102 and cover member 103 with the transparent member 101 and display panel 20 held therebetween, and completing assembly.
A display device 100 with a substantially square tubular shape according to this embodiment of the invention can thus reliably hold the display panel sealed by means of a simple construction, and thus easily provides water resistance and dust resistance.

The invention thus described can reliably store a display panel in a sealed state using a simple construction, and can be used to easily provide a ring-shaped display device with excellent water resistance or dust resistance.

It will be obvious to one with ordinary skill in the related art that these embodiments of the present invention can be varied in many ways without departing from the scope of the invention.
These embodiments of the invention are described as using an electrophoretic display panel, but any type of flexible display device can be used, including a liquid crystal display or an electroluminescent display.

Furthermore, the invention is not limited to arrangements having an electrophoretic medium 60 contained in microcapsules 53, and the segments 40 themselves can be sealed with the electrophoretic medium 60 injected to the segments 40.
Furthermore, the display device of the present invention is described in these embodiments as a display unit for an electronic device that is worn on the wrist, but the invention can be applied to a display unit for any type of ring shaped (including cylindrical, rectangular tubular, or polygonally tubular) electronic device (including PDAs and cell phones).

### List of reference numerals

- 10, 10X, 10Y, 60, 80, 90, 100: display device
- 11, 61, 81, 91,: 101 transparent member
- 12: support member
- 13: first cover member
- 14: second cover member
- 15, 41, 64: cover member
- 21 - 24: seal

## Claims

1. A display device comprising:
a display unit for displaying information, the display unit being ring shaped or shapeable in a ring;
a ring-shaped support member for supporting the display unit;
a ring-shaped transparent member that is disposed on the display side of the display unit supported by the support member to protect the display unit; and
a ring-shaped cover member that is fit to the support member for housing the display unit in cooperation with the support member and the transparent member.

2. The display device described in claim 1, wherein the cover member comprises:
a first cover member that screws together with one axial end part of the support member; and
a second cover member that screws together with the other axial end part of the support member.

3. The display device described in claim 1, wherein:
the cover member screws together with one axial end part of the support member; and
the support member comprises a holding part on the other axial end part to hold the transparent member in cooperation with the cover member.

4. The display device described in claim 1, wherein:
the support member comprises a holding part on one axial end part; and
the cover member comprises a fitting part that is fit and secured in the other axial end part [of the support member] for holding the transparent member in cooperation with the holding part.

5. The display device described in claim 4, wherein:
the support member comprises a screw receiving part for receiving a screw; and
the cover member comprises a screw hole part,
the cover member being fastened to the other axial end part of the support member by screwing the screw through the screw hole part into the screw receiving part and fitting the fitting part.

6. The display device described in claim 5, wherein:
the screw receiving part is perpendicular to the axial direction; and
the screw hole is rendered substantially in the middle in the direction perpendicular to the axial direction of the cover member.

7. The display device described in claim 4, wherein:
the support member comprises an engaged part;
the cover member comprises a flexible arm part and an engaging part supported by the arm part; and
the cover member is fastened to the other axial end part of the support member by pressing the fitting part of the cover member in from the other end part of the support member while deflecting the arm part, causing the engaging part to engage the engaged part and inserting the fitting part.

8. The display device described in claim 4, wherein:
the fitting part is press fit into one axial end part of the support member.

9. The display device described in any of claims 1 to 8, wherein:
seal members are disposed between the cover member and the support member and transparent member; and
the display unit is housed in a sealed state.

10. A display device comprising:
a display unit for displaying information, the display unit being ring shaped or shapeable in a ring;
a ring-shaped support member made from a transparent material and comprising a storage channel that is ring-shaped in section for holding the display unit; and
a ring-shaped cover member that screws together with the support member to house the display unit in cooperation with the support member.

11. The display device described in claim 10, wherein:
a seal member is disposed between the cover member and the support member; and
the display unit is housed in a sealed state.
